# EUROPEAN PATENT APPLICATION

(11) **EP 2 939 860 A1**
(43) Date of publication of application: **04.11.2015**
(21) Application number: 14398012.6
(22) Date of filing: 24.10.2014
(51) Int. Cl.: B60K 15/035

(54) **Integrated ventilation system for metallic fuel tank with organometallic coating**

(30) Priority: 02.05.2014 BR 102014010655
(71) Applicant: Aethra Sistemas Automotivos S/A, 32686-190 Minas Gerais (BR)
(72) Inventor: Sportelli, Pietro, 32686-190 Minas Gerais (BR)
(74) Representative: Pereira da Cruz, Joao

(57) **Abstract**

This patent covers an integrated ventilation system fastened inside a fuel (reservoir) tank, containing a fuel feeding valve (2) that comprises a continuous tube (3) interconnecting the fuel vapor components, such as: fuel filling stop valves (4), intermediary liquid/vapor separator (5) and vent valves (6 and 7), to exit through an outlet opening (8), connected to an appropriate tubing linked to the fuel vapor treatment carbon canister system. Such continuous tube is fastened to the fuel tank by means of a quick coupler (10) with coupling flange (11) and a snap-on rod (12) to attach the tube.

## Description

This invention patent covers an integrated ventilation system for vehicle fuel tank, particularly metallic tanks with surface organometallic coating, which reduces the emissions of harmful fuel vapors into the atmosphere and enables meeting the emissions thresholds stipulated by the environmental regulations in force.

The current state of the technique to control fuel vapor emissions by motor vehicles makes use of systems typically made up of a fuel reservoir (tank) provided with a fuel inlet, a number of fuel valves, one tube to feed fuel into the ignition system and a fuel vapor treatment system (technically known as carbon canister).

In these systems, fuel vapors generated inside the fuel tank flow into the carbon canister and enrich the fuel mixture that is fed into the ignition system. Moreover, fuel fluids (in the form of liquid, droplets, spray and vapor) flow out of the reservoir (tank) through one or more valves that are connected by means of proper tubing to a liquid/vapor separator between the vapor treatment system and the tank.

Due to pressure and temperature variations, the fuel fluid flows into the liquid/vapor separator at a high speed, carrying on a considerable amount of liquid fuel in the form of droplets. The liquid/vapor separator catches the liquid fuel and sends the fuel vapor flow to the vapor recovery system. The liquid fuel subsequently returns to the fuel tank due lower pressure inside the tank.

As far as the fastening of valves (components) in the fuel tank is concerned, an important factor is to ensure the system's impermeability to fuel in order to meet the strict environmental regulations. A common practice when connecting a valve to a fuel tank is to drill a hole whose size is sufficient to accommodate the component and safely fasten the component using different fastening elements, such as (for example): riveting, welding, etc. However, such methods require the use of special sealing elements between the component and the tank.

According to another technique, a valve can be fastened to a quick coupling element firmly connected to the fuel tank upper surface. However, in addition to one or two valves, the external surface of a tank supports also part of the filler neck and the corresponding piping, as well as electric cables in certain cases, which requires a special design to properly use the inside space of the fuel tank, plus some other considerations to be taken into account.

Another consideration as far as the connection of valves in fuel tanks is concerned is the valve operating efficiency, or, in other words, the level in which the valve is closed (sometimes referred to as cut-off or switching off) and the level in which the valve is reopened. One of the core operational considerations is the required space, which is extremely important, particularly in the case of cars. For this reason, a usual requirement is that the "empty space", i.e. the space between the maximum fuel level and the top tank wall, should be kept at a minimum. Nevertheless, as the valve is inserted in the tank, care must be taken not to increase the empty space.

Another parameter to be taken into consideration is the time required to assemble and fasten each component of the vapor system in the fuel tank and the connection of the articulated piping, as well as the costs required to perform such process steps.

In view of the growing concern of organizations and public agencies about the environment, there is an increasing requirement to keep the level of fuel emission from the fuel tank and its components at a minimum. The outcome of such a requirement is that nowadays the connections between the valves and fuel tanks are made in such a way so as to essentially keep fuel emissions at virtually zero. As a consequence, there is an increasing trend toward reducing as much as possible the number of openings in the tank (preferably just one) beyond the existing ones and reallocating as far as possible the ventilation system and the corresponding valves and connections to inside the tank. This technique being unknown before the issuance of this patent

This patent is innovative in the sense that is presents an integrated ventilation system for fuel tanks, particularly for metallic tanks with surface organometallic coating, which allows installing components (valves, tubes and fuel vapor separator) inside the tank and to couple the fuel feeding system in a practical and functional manner by interconnecting the various fuel vapor components, along with a quick assembly.

The integrated ventilation system for metallic fuel tank with organometallic coating covered by this patent of invention can be better understood by referring to the attached illustrations, which are an integral part of this report and contain numerical references, along with a description of the system's technical specificities. Such illustrations do not restrict the system's configuration in terms of its dimensions, proportions and eventual finishing types or the reach of its practical application.

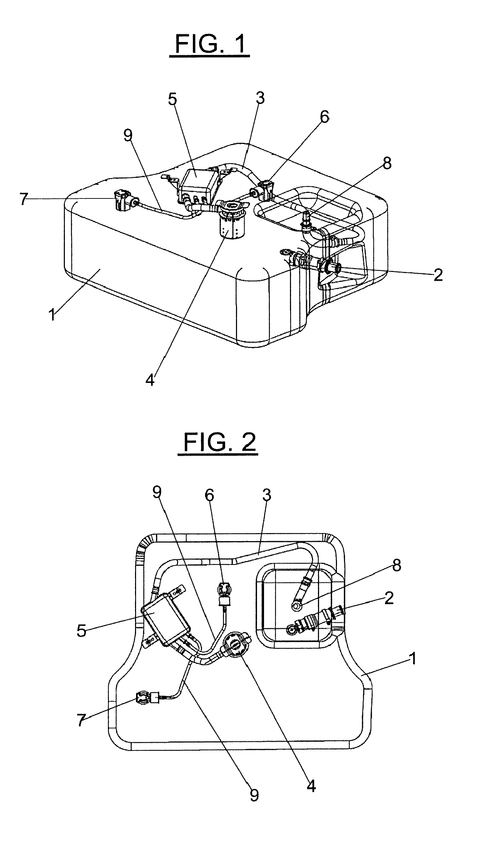

Figure 1 is an isometric view of a fuel tank (reservoir), drawn transparently to show the fastening of the integrated ventilation system inside the tank.

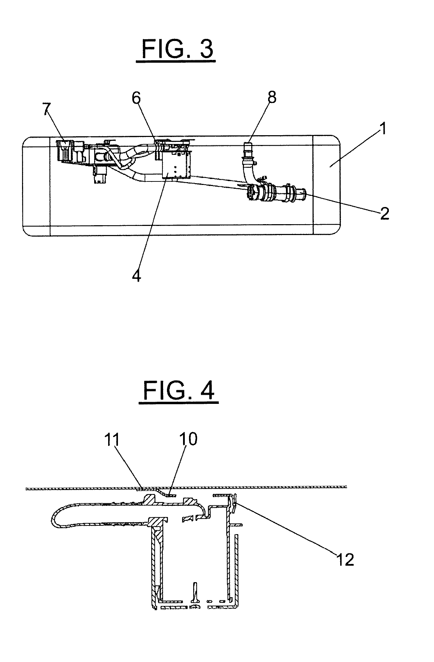

Figures 2 and 3 are the posterior and bottom views of the fuel tank, also drawn transparently to show the same situation.
Figure 4 is an A-A cross section of the quick coupler used to fasten the vapor separator, which was not shown in the previous figures.

According to these figures and their numerical references, this patent covers an integrated ventilation system internally fastened in a fuel tank (reservoir) (1), preferably made from metal, with organometallic coating and rectangular profile, provided with two extensions in the rear part suitable for assembly in a vehicle, as is known in the art. In this tank, the fuel is fed through a fuel feeding valve (2), a flow check valve that allows the fuel to flow in just one direction in order to avoid fuel backflow toward the filler neck (not shown in the drawings) when the fuel tank (1) reaches its maximum capacity.

Such integrated ventilation system comprises a continuous tube (3) made from rigid plastic, which can also be flexible or resilient, following the inside shape of the fuel tank (1) and interconnecting the fuel vapor components, such as: fuel filling stop valves (4), intermediary liquid/vapor separator (5) and vent valves (6 and 7).

The above-mentioned continuous tube (3) starts from the filling stop valve (4), passes through the intermediary liquid/vapor separator (5) and runs toward an outlet opening (8) located in the upper wall of the fuel tank (1), which is connected to an appropriate tubing (not shown) linked to the fuel vapor treatment carbon canister system (not shown), as is known in the art.

The vent valves (6 and 7) are connected to the intermediary liquid/vapor separator (5) through secondary tube segments (9) and externally fastened to the continuous tube (3) by means of safe fittings. They are located, along with the fuel filling valve (4), in the highest part of the fuel tank (1) and the holes required for the valve operation are unlocked as required.

The continuous tube (3) e basically of uniform diameter, but it can be a little larger in specific points to enable the connection with certain types of fuel vapor components. Such fuel vapor components extend axially inside the continuous tube (3) to allow for suitable coupling between the tube and the respective fuel vapor components.

The continuous tube (3) diameter can be similar to that of existing tube segments to connect the different valve accessories or can be slightly larger, if necessary. It can be fastened to the fuel tank (1) upper surface or the upper ends of the fuel tank side walls by means of different fastening devices. Such arrangement makes it unnecessary to make any additional opening in the fuel tank (1), except in the outlet end (8) of the continuous tube (8).

The fastening of the continuous tube (3) to the fuel tank (1) can be made, for instance, by means of a quick coupler (10), which comprises a coupling flange (11) on the fuel tank (1) wall and a snap-on rod (12) to attach the continuous tube (3). The fastening of the flange part to the fuel reservoir (tank) (1) can be made, for example, by means of adhesive agent, welding process or fittings, among other means. The fitting arrangement is preferable as it allows for a faster and more efficient coupling of the various types of fuel vapor components.

## Claims

1. Integrated ventilation system for metallic fuel tank with organometallic coating **characterized by** its fastening inside a fuel (reservoir) tank (1), comprising a continuous tube (3) that interconnects fuel vapor components, such as: fuel filling stop valves (4), intermediary liquid/vapor separator (5) and vent valves (6 and 7).

2. Integrated ventilation system for metallic fuel tank with organometallic coating according to claim 1, **characterized by** a continuous tube (3) that starts from the filling stop valve (4), passes through the intermediary liquid/vapor separator (5) and runs toward an outlet opening (8) located in the upper wall of the fuel tank (1); such outlet opening (8) is connected to a tubing linked to the fuel vapor treatment carbon canister system.

3. Integrated ventilation system for metallic fuel tank with organometallic coating according to claim 1, **characterized by** vent valves (6 and 7) connected to the intermediary liquid/vapor separator (5) through secondary tube segments (9) and externally fastened to the continuous tube (3) by means of safe fittings. They are located, along with the fuel filling valve (4), in the highest part of the fuel tank (1) and the holes required for the valve operation are unlocked.

4. Integrated ventilation system for metallic fuel tank with organometallic coating according to claim 1, **characterized by** a continuous tube (3) made from rigid plastic, which can also be flexible or resilient, following the inside shape of the fuel tank (1); it is basically of uniform diameter, but it can be a little larger in specific points to enable the connection with certain types of fuel vapor components. Such fuel vapor components extend axially inside the continuous tube (3) to allow for suitable coupling between the tube and the respective fuel vapor components.

5. Integrated ventilation system for metallic fuel tank with organometallic coating, according to claims 1 and 4, **characterized by** the fact that the continuous tube (3) diameter can be similar to that of existing tube segments to connect the different valve accessories or can be slightly larger, if necessary; it can be also fastened to the fuel tank (1) upper surface or the upper ends of the fuel tank side walls by means of different fastening devices, and such arrangement makes it unnecessary to make any additional opening in the fuel tank (1), except in the outlet end (8) of the continuous tube (3).

6. Integrated ventilation system for metallic fuel tank with organometallic coating according to claims 1 and 5, **characterized by** the fact that the fastening of the continuous tube (3) to the fuel tank (1) can be made (for instance) by means of a quick coupler (10), which comprises a coupling flange (11) on the fuel tank (1) wall and a snap-on rod (12) to attach the continuous tube (3).

7. Integrated ventilation system for metallic fuel tank with organometallic coating according to claims 1 and 6, **characterized by** the fact that the fastening of the flange part (11) of the quick coupler (10) to the fuel reservoir (tank) (1) can be made by means of adhesive agent, welding process or fittings, among other means.
